# EUROPEAN PATENT APPLICATION

(11) **EP 3 838 364 A1**
(43) Date of publication of application: **23.06.2021**
(21) Application number: 20214066.1
(22) Date of filing: 15.12.2020
(51) Int. Cl.: B01D 1/28, B01D 61/02, C02F 1/00, C02F 1/04, C02F 1/44, C02F 1/46, C02F 1/66, C02F 9/00

(54) **A PROCESS FOR THE TREATMENT OF WASTEWATER FROM OLIVE OIL PRODUCTION**

(30) Priority: 19.12.2019 TR 201920847
(71) Applicant: Saygin Kimya Ve Aritim Sistemleri Ltd., 48400 Mugla Bodrum (TR)
(72) Inventor: SAYGIN, Ömer, 48400 Mugla Bodrum (TR)
(74) Representative: Reitstötter Kinzebach

(57) **Abstract**

The present invention relates to a process for the treatment of wastewater from the production of olive oil, namely the olive mill wastewater (OMWW), specifically the wastewater from olive oil extraction, also referred to as black water from olive oil extraction. The process comprises the following steps:
i) Evaporating the wastewater in an evaporator with mechanical vapour recompression (MVR evaporator) to obtain a bottom fraction and an acidic aqueous distillate;
ii) Subjecting the aqueous distillate to the following measures in any order, provided that step b is carried out prior to stab ii.b):
ii.a) neutralization of the acidic distillate;
ii.b) reverse osmosis or electrodialysis, whereby a permeate/diluate and a reject/concentrate containing one or more salts of organic carboxylic acids are obtained;
ii.c) treatment with active carbon.

A further aspect of the present invention relates to the use of the salts, in particular the calcium salts, of the carboxylic acids contained in the reject as a supplement for food and feed.

Yet another aspect of the present invention relates to the use of the mixture of the pomace and the concentrated residue obtained by the process as described herein as solid organic fuel.

Another aspect of this invention relates to an apparatus for the treatment of OMWW which comprises an evaporator with mechanical vapour recompression, a treatment unit containing active carbon, a neutralization unit and either a reverse-osmosis unit or an electrodialysis unit.

## Description

The present invention relates to a process for the treatment of wastewater from the production of olive oil, namely the olive mill wastewater (OMWW), specifically the wastewater from olive oil extraction, also referred to as black water from olive oil extraction.

Wastewater from olive mills, hereinafter OMWW, specifically the black water from olive oil extraction, is a mildly acidic red-black emulsion containing 85 to 92% water. It originates from the olive, the added water required for washing the fruit, and for the centrifugation process. OMWW is a serious and growing concern for the olive oil industry. Each year, more than 30 million tons of harmful OMWW are produced. Although there have been great efforts in the treatment of OMWW in the past, none of them have become common practice for economic reasons. At present, the only practiced and legal method is water and volume reduction by natural evaporation in artificial ponds and drying the remaining semi-solid residue in ovens to obtain a solid fuel material. To reduce the drying costs of the semi-solid residue, most of the water has to be evaporated from the pond which requires a pond depth of not more than 1.5 m in the beginning and, thus, large pond areas are required which in turn cannot be used for agricultural purposes. As the OMWW contains volatile organic matter such as aliphatic carboxylic acids, the evaporation may be a health nuisance for the neighbouring communities and people are bothered by smell and fly nuisance originating from these ponds. In view of the fact that the Mediterranean Basin is the most important olive oil production site and a touristic reason at the same time, the ecological impact resulting from the ponds is highly problematic.

Irrigation of fields by raw OMWW has been studied intensively in the past. However, it is restricted due to the phytotoxic polyphenols contained in the OMWW. Moreover, at the time of OMWW production, which is typically from October to February, irrigation in the Mediterranean area is not required so that in these months, irrigation is only a legal way of getting rid of OMWW. Moreover, irrigation may also be accompanied by smell nuisance due to the volatile organic matter contained in the OMWW

Recently, evaporation with mechanical vapour recompression, hereinafter MVR evaporation technology, has been suggested for the treatment of OMWW. In the MVR evaporation technology, the steam is mechanically compressed to a higher pressure resulting in an increase of the steam temperature to 105°C or higher and the hot steam may be used as a source of energy for further evaporation of OMWW. Since the energy introduced for evaporation can be recycled during condensation, the costs of evaporation are reduced to a minimum. By the MVR evaporation technology, the COD value, i.e. the chemical oxygen demand, of the OMWW, typically in the range of 80,000 to 200,000 ppm, can be reduced to 5,000 to 20,000 ppm in the distillate obtained by the MVR evaporation technology. However, these values are still too high in many countries for the distillate to be discharged into the environment. Therefore, it is suggested that the distillate is used for irrigation or it may be directed to a municipal sewage plant. Again, the periods for OMWW production and irrigation do not overlap and, therefore, the use of the distillate does not produce a particular benefit. Moreover, the organic matter contained in the distillate may still have a negative ecological impact.

Therefore, there is a great need for a process for the treatment of OMWW which overcomes the disadvantages of prior art.

Surprisingly, it was found that these objectives are solved by the process as defined herein.

Therefore, the present invention relates to a process for the treatment of OMWW which comprises the following steps:
i) Evaporating the wastewater in an evaporator with mechanical vapour recompression (MVR evaporator) to obtain a bottom fraction and an acidic aqueous distillate;
ii) Subjecting the aqueous distillate to the following measures in any order, provided that step ii.a) is carried out prior to steb ii.b):
   ii.a) neutralization of the acidic distillate;
   ii.b) reverse osmosis or electrodialysis, whereby a permeate or diluate, respectively and a reject or concentrate are obtained, where the reject and the concentrate, respectively, contain one or more salts of organic carboxylic acids;
   ii.c) treatment with active carbon.

Further preferred embodiments are described hereinafter and in the claims.

The process of the present invention is based on the surprising finding that most of the organic matter contained in the distillate, frequently at least 85% by weight of the organic matter contained in the distillate, are organic acids. These organic acids can be efficiently removed from the distillate by the measures of steps ii), in particular by steps ii.a) and ii.b).

The process is associated with several benefits. First of all, the permeate obtained by reverse osmosis or electrodialysis in step ii.b) has a COD value that is significantly lower than the COD value of the distillate obtained by the MVR evaporation technology of prior art and is typically below 2,000 ppm, in particular 1,500 ppm or lower, e.g. in the range of 400 to below 2,000 ppm, in particular in the range of 500 to 1,500 ppm. Moreover, the salts of the organic carboxylic acids contained in the reject/concentrate can be easily isolated therefrom. These organic acids are mainly a mixture of C₁-C₅-alkanoic acids, namely formic acid, acetic acid, propionic acid, butyric acid and valeric acid which have antifungal and antibacterial activity. Therefore, the salts can be used as supplements for food and fodder against microbial spoilage, i. e. as a preservative. Moreover, the bottom product of the process can be further processed and then be mixed with the pomace of the olive oil production to produce an additional amount of solid organic fuel.

Therefore, a further aspect of the present invention relates to the use of the salts, in particular the calcium salts, which are obtained if the distillate is neutralized with lime, of the carboxylic acids contained in the reject/concentrate as a preservative for food and feed.

Yet another aspect of the present invention relates to the use of the mixture of the pomace and the concentrated residue obtained by the process as described herein as solid organic fuel.

Another aspect of this invention relates to an apparatus for the treatment of OMWW which comprises an evaporator with mechanical vapour recompression, a treatment unit containing active carbon, a neutralization unit for neutralizing the distillate and either a reverse-osmosis unit or an electrodialysis unit. Besides the aforementioned units, the apparatus of the present invention may contain the following units:
- a steam generator, e.g. for compensating heat losses of the MVR evaporator or for generating steam for regenerating the active carbon in the active carbon unit, and for concentrating the bottom fraction of the MVR evaporator and/or for concentrating the reject/concentrate to dryness;
- one or more heat exchangers, e.g. for cooling the hot distillate und using the thus obtained heat energy for pre-heating the OMWW before it is introduced into the MVR evaporator;
- a tank for the OMWW having an aeration unit, i.e. an aeration unit included in the feed tank, wherein the carbon dioxide present in the OMWW is stripped prior to introducing the OMWW into the steam generator.

The present invention also relates to the use of a process as defined herein for the treatment for OMWW to obtain a treated water with COD values at most 2000 ppm, in particular at most 1500 ppm.

The present invention also relates to the use of an apparatus as defined herein for the treatment for OMWW to obtain a treated water with COD values at most 2000 ppm, in particular at most 1500 ppm.

Here and in the following, the term "COD value" means the "chemical oxygen demand". It is commonly expressed in mass of oxygen consumed over a defined volume of a solution and is typically given in ppm or mg/L. It is an indicative measure of the quantity of organic matter in water. The COD value can be determined by the standard measure according to ISO 6060:1989.

Here and in the following, the term "MVR evaporator" means an evaporator with mechanical vapour recompression.

Here and in the following, the term "OMWW" refers to the wastewater from the production of olive oil, namely the olive oil mill wastewater (OMWW), specifically the wastewater from olive oil extraction, also referred to as black water from olive oil extraction.

Here and in the following, the terms "active carbon", "activated carbon" and "charcoal" are used synonymously.

According to step i) of the process according to the invention, the OMWW is evaporated in an MVR evaporator. In the MVR evaporator, the OMWW is heated to a temperature above its boiling temperature. Thereby, the water and volatile organic compounds are evaporated. The thus obtained vapour is compressed and thereby its temperature increases. The hot compressed vapour is fed back to heat the OMWW in order to produce more vapor or steam.

MVR evaporators have been known for a long time and are often and commercially available. They are frequently used for the concentration of wastewater. While different types of MVR evaporators are known, principally any of them can be used. The MVR evaporator usually comprises an evaporator unit in which the water contained in the OMWW is evaporated, and a compression unit in which the vapours are compressed, whereby the vapours are heated to temperatures of 105°C or higher, e.g. in the range of 105 to 140°C and can thus be used to heat the heat-exchanger surfaces of the evaporator. The evaporator unit is usually designed as a falling film evaporator. However, it can also be designed as a trickle evaporator. The falling film evaporator is typically designed as a tube bundle evaporator. Yet, it can also be designed as a plate evaporator. Typically, the OMWW is fed into the evaporator from the top. In the case of a falling film evaporator, the OMWW flows as a thin film along the externally heated inner heat-exchanger surfaces, e.g. the inner surfaces of the tubes, whereby it heats up and evaporates the water contained in it. The remaining liquid is collected at the bottom of the evaporator unit from which the major part of the liquid is pumped back to the top of the evaporator and minor part is removed as the bottom fraction. The vapours, after passing through a separator unit to separate droplets if necessary, are then compressed in the compression unit, typically a centrifugal or roots type compressor, where they heat up to temperatures of 105°C or higher, typically in the range of 105 to 140°C. The compressed vapours are then used to heat the heat-exchanger surfaces of the evaporator. For this, they are directed to the outer sides of the heat-exchanger surfaces. Thereby, the vapours cool down and condense as distillate which is then fed to step ii) of the process of the invention.

Typically the MVR evaporator is operated at pressures higher than atmospheric pressures to avoid air intake, which would lead to poorer heat transfer. Generally, the MVR evaporator is operated at absolute pressures in the range of 1040 to < 1500 mbar. Typically the evaporator unit is operated at an overpressure of 20 to 60 mbar and the compression unit is operated at an overpressure in the range of 200 to 490 mbar.

During operation of the MVR evaporator fouling, i.e. the formation of solid/semi-solid plaques, may occur on the interior heat-transfer surfaces of the MVR evaporator due to the organic matter contained in the OMWW. It was found that these plaques can only be removed poorly and incompletely by chemical means such as treatment with dilute aqueous sodium hydroxide. Moreover, chemical treatment requires a prolonged shutdown of the evaporator. Surprisingly, it is possible to remove the plaques quickly and completely in an efficient manner by means of high-pressure jets. Tap water can be used to operate the high-pressure ejector, but, preferably, the distillate produced during evaporation in the MVR evaporator is used. While it is possible to treat the heat transfer surfaces with high-pressure jets manually, the treatment can be automated. For this, the inventors have developed a PLC controlled positioning device using two parameters: angle of rotation and distance from the centre of the evaporation units, which allows for positioning the ejector nozzle of the high pressure ejector relative to the surfaces to be treated, such that it removes the plaques. For example, in case of tube bundle evaporators the device positions the ejector nozzle just below each tube entrance. After pressurizing the water the ejector nozzle moves up inside of the tube and removes the plaques, which come down later as the pressure is released. Treatment with the high pressure jets can be carried out continuously without interrupting the evaporation process.

In the MVR evaporator a bottom fraction is obtained which contains the majority of the low volatile organic matter contained in the OMWW and residual water. Moreover, an aqueous distillate is obtained which has a considerably lower COD value than the OMWW subjected to evaporation. Typically the distillate is mildly acidic, as it contains the volatile organic acids contained in the OMWW. Normally, its pH value is in the range of pH 3 to pH4. Frequently, the aqueous distillate has a COD value in the range of 5,000 to 20,000 ppm.

Principally, any OMWW quality can be subjected to the evaporation step i). The total solids content of the OMWW subjected to the evaporation step i) is in the range of 2 to 10% by weight, in particular in the range of 2 to 6% by weight. Frequently, the OMWW has a COD value in the range of 80,000 to 200,000 ppm.

For example, an OMWW produced from a 3-phase decanter typically has an overall solids content of about 5 to 6% by weight. This OMWW can be directly introduced into the MVR evaporator to carry out step i) of the inventive process. However, it may be beneficial to carry out a solid liquid separation first to reduce the total solids content to below 5% by weight prior to subjecting the OMWW to the evaporation of step i). The solid liquid separation can be achieved for example by introducing the freshly prepared OMWW into a tank or a pond and to allow the solid matter contained in the OMWW to settle. Depending on the kind of solid liquid separation, the total solids content in the OMWW can be reduced to 2 to 3% by weight. Due to organic acidic compounds contained in the OMWW, its pH value is frequently in the range of pH 4.0 to pH 5.5.

It was found beneficial to remove carbon dioxide from the OMWW before the OMWW is introduced into the MVR evaporator. Carbon dioxide is typically present in OMWW because of fermentation processes taking place in the OMWW. This carbon dioxide is preferably stripped from the OMWW before it is fed to the MVR evaporator. Stripping is generally achieved by passing air through the OMWW. Stripping is carried out in an aeration unit present in the tank for the OMWW from which the OMWW is fed to the MVR evaporator.

The portion of the water that can be evaporated from the OMWW in the MVR evaporator depends on its initial total solids content. Usually, the weight ratio of distillate to bottom fraction is in the range of 70:30 to 90:10, in particular in the range of 75:25 to 85:15.

Typically, the evaporation of step i) is carried out until the bottom fraction has a solids content of at least 15% by weight, in particular at least 20% by weight. As the viscosity of the bottom fraction increases with growing total solids content, the evaporation of step i) will preferably be carried out in such a way that the total solids content of the bottom fraction does not exceed 40 % by weight, in particular 35% by weight. This is because the increasing viscosity may cause distribution and heat transfer problems and also furthers scaling. Preferably, the evaporation of step i) is carried out until the bottom fraction has a total solids content in the range of 15 to 35 % by weight, in particular in the range of 20 to 30 % by weight by weight.

It may be beneficial to compensate heat losses of the evaporator by additional steam from a steam generator. Instead of using make-up water for the steam generator it is possible to use the bottom fraction obtained in step i) as a source for this additional steam. Therefore, the steam generator offers the possibility to further concentrate the bottom fraction up to total solids contents of 50% by weight or higher, in particular 70% by weight or higher, e.g. to total solids contents of 50 to 90% by weight or even 70 to 90% by weight. The calorific value of bottom fraction obtained from the MVR generator is about 3,500 to 4,000 kcal/kg and thus similar to the dry pomace itself. As the hot bottom fraction is still liquid but solidifies after cooling, it can be mixed in the hot liquid form with dried pomace to increase the solid fuel amount. It is also possible to mix the hot residue, which is obtained by concentrating the bottom fraction to a total solids contents of 50% by weight or higher with pomace from the 3 phase decanter and dry the mixture in an oven. The thus obtained product is a solid matter which is easy to handle and which can be used as organic fuel.

Generally, the hot distillate from the MVR evaporator has a temperature of above 100°C and up to 130°C, e.g. in the range of 102 to 120°C and especially in the range of 104 to 110°C. As the distillate is typically cooled to a temperature of at most 45°C, e.g. to a temperature in the range of 20 to 45°C prior to subjecting the aqueous distillate to the measures of step ii), the heat contained in the hot distillate can be used for preheating the cold OMWW before it is introduced into the MVR evaporator. Typically, the heating of the cold OMWW is achieved by means of a tubular heat exchanger through which the hot distillate is passed.

The thus cooled distillate typically has an acidic pH value of lower than pH 4, e.g. of about pH 3 because it contains carboxylic acids. While it is principally possible to carry out the measures of step ii.b), i.e. either the reverse osmosis or the electrodialysis, with the acidic distillate, it has been found beneficial to neutralize the aqueous distillate with an inorganic base prior to carrying out step ii.b) to a pH value of above pH 6, in particular to a pH value in the range of pH 6.5 to pH 8.5 and especially in the range of pH 7.0 to pH 8.0. This is because in their acidic form, the acids contained in the distillate may partly penetrate the membranes of the reverse osmosis unit and the electrodialysis unit, respectively, and thus be found in the permeate and the diluate, respectivly. To further reduce the COD value of the permeate/diluate, it is, therefore, necessary to neutralize the aqueous distillate prior to carrying out step ii.b).

By neutralization of the aqueous distillate the COD value of the permeate/diluate obtained in step ii.b) can be reduced from to COD values of 2,000 ppm or lower, in particular to a value of at most 1,500 ppm or below, i.e. in the range of 400 to < 2000 ppm and especially in the range of 500 to 1500 ppm. The thus obtained permeate/diluate can be directly discharged into the environment.

Moreover, by carrying out a neutralization of the acidic distillate with an inorganic base prior to step ii.b) to a pH value of above pH 6, the acids contained in the distillate are more efficiently enriched in the reject/concentrate in the form of their salts from which they can be easily isolated, e.g. by evaporation of the reject/concentrate to dryness.

For neutralization, principally any base can be used. It is beneficial if an inorganic base, in particular an alkali metal hydroxide, such as sodium hydroxide, or an earth alkaline metal hydroxide, such as calcium hydroxide is used for neutralization. Typically, neutralization is achieved by adding an aqueous solution of the respective base to the aqueous distillate. In particular it has been found beneficial to use aqueous calcium hydroxide for neutralization, e.g. lime milk. Thereby, the acids are converted into their calcium salts which are sparingly soluble and can be obtained more easily from the reject/concentrate. Typically, evaporation of the reject/concentrate, which contains carboxylic acids in the form of their calcium salts, to dryness will result in a free-flowing solid of the calcium salts. It may be beneficial to treat the reject/concentrate with activated carbon, e.g. by passing it through a column of activated carbon, before it is evaporated to dryness. Thereby, impurities are removed and the salts of the carboxylic acids contained in the reject/concentrate are obtained with higher purity.

The thus isolated salts of the carboxylic acids are valuable products. As the carboxylic acids are mainly C₁-C₅-aliphatic monocarboxylic acids, in particular mainly C₂-C₄-aliphatic monocarboxylic acids such as formic acid, acetic acid, propionic acid, butyric acid and valeric acid, the mixture has antifungal and antibacterial activity. Moreover, these acids are acceptable for nutrition purposes. Therefore, the thus obtained salts can be used in food and fodder formulations as an antimicrobial supplement against spoilage of food or fodder. For this, it is not necessary to separate the different acids from each other. Rather, the mixture obtained from the reject can be used as such. However, if it is desired to separate the acids and isolate them, classical separation techniques may be applied. For example, the salts can be dissolved by adding concentrated sulphuric acid. After separation of the inorganic sulphate salts, e.g. calcium sulfate, the free acids can be separated for example by distillation or other separation methods.

The neutralized distillate is then subjected to steps ii.b) and ii.c) of the claimed process. Steps ii.b) and ii.c) can be carried out in any order. In one embodiment of the invention, the treatment of the neutralized distillate with active carbon is carried out before carrying out the measures of step ii.b). However, it is preferred to subject the neutralized distillate to the measures of step ii.b) first and then to carry out a treatment of the permeate/diluate with active carbon in step ii.c). It is also possible to treat the acidic distillate with active carbon in step ii.c) first followed by carrying out the neutralization of step ii.a) and then subjecting the neutralized and treated distillate to step ii.b).

Particular preference is given to the following embodiment, where the steps are carried out in the following order:
i) Evaporating the wastewater in an evaporator with mechanical vapour recompression to obtain a bottom fraction and an acidic aqueous distillate;
ii.a) neutralisation of the distillate to a pH value of above pH 6, in particular to a pH value in the range of pH 6.5 to pH 8.5 and especially in the range of pH 7.0 to pH 8.0;
ii.b") subjecting the neutralized distillate to a reverse osmosis or electrodialysis to obtain an aqueous permeate/diluate and a reject/concentrate, where the reject/concentrate contains one or more salts of organic carboxylic acids;
ii.c") a treatment of the permeate/diluate with active carbon.

Preference is also given to the following embodiment, where the steps are carried out in the following order:
i) Evaporating the wastewater in an evaporator with mechanical vapour recompression to obtain a bottom fraction and an acidic aqueous distillate;
ii.a) neutralisation of the acidic distillate to a pH value of above pH 6, in particular to a pH value in the range of pH 6.5 to pH 8.5 and especially in the range of pH 7.0 to pH 8.0;
ii.c') treatment of the neutralized distillate with active carbon to obtain a treated and neutralized distillate;
ii.b') reverse osmosis or electrodialysis of the treated and neutralized distillate, to obtain a permeate/diluate and a reject/concentrate, where the reject/concentrate contains one or more salts of organic carboxylic acids.

According to step ii.b) (or ii.b') or ii.b"), respectively) of the process of the invention, the distillate is subjected to a reverse osmosis or to an electrodialysis. In case of reverse osmosis, a permeate and a reject are obtained. In case of electrodialysis, a diluate and a concentrate are obtained. The term permeate/diluate refers to both the permeate obtained in the reverse osmosis and the diluate obtained in the electrodialysis. The term "reject/concentrate" refers to the both the concentrate obtained in the electrodialysis and to the reject obtained in the reverse osmosis. The permeate/diluate is water which is almost devoid of any acidic organic compounds contained in the distillate, while the reject/concentrate contains the majority of the acidic organic compounds in the form of their salts contained in the neutralized distillate.

Reverse osmosis as well as electrodialysis are carried out under the conditions which are generally applied in reverse osmosis and electrodialysis, respectively. Optimum parameters can be determined by routine. Typically reverse osmosis and electrodialysis, respectively, are carried out at temperatures not higher than 45 °C, e.g. in the range of 20 to 40°C. Preference is given to carry out step ii.b) as a reverse osmosis. The reverse osmosis is usually carried out, such that the volume ratio of the permeate to reject is typically in the range of 90:10 to 95:5 and in particular in the range of 91:9 to 94:6. Likewise, the electrodialysis is usually carried out, such that the volume ratio of the diluate to concentrate is typically in the range of 90:10 to 95:5 and in particular in the range of 91:9 to 94:6.

The treatment of the neutralized distillate or the permeate/diluate with active carbon in step ii.c) (or ii.c') or ii.c"), respectively) is typically achieved by passing the respective liquid to a column filled with active carbon. By contacting the cooled and optionally neutralized distillate and/or the permeate/diluate with the active carbon, most of the volatile organic compounds, such as alcohols, aldehydes and aromatics, are adsorbed by the active carbon. Thereby, the unpleasant odour of the distillate or permeate disappears. Moreover, the treatment with the active carbon results in the disappearance of any light colour of the respective liquid.

After the treatment of the respective liquid with the active carbon, the active carbon can be regenerated. Regeneration can be achieved by passing steam through the active carbon or by heating the active carbon, e.g. by using the chimney gases of the MVR evaporator which typically have temperatures ranging from 200 to 250°C or by combinations of both measures. Thereby, the volatile organic compounds adsorbed on the active carbon are released as a gas or a steam. The gas or steam is condensed to a liquid, in particular an aqueous liquid by cooling. The liquid contains the adsorbed compounds which are valuable products. The absorbed compounds can be obtained from the aqueous liquid by a conventional extraction of the aqueous liquid an organic solvent such as an aliphatic hydrocarbon, e.g. hexane, or a dialkyl ether followed by removal of the organic solvent. The thus regained absorbed compounds are referred to as "olive spirit", which is a valuable product.

For practical reasons the treatment of the distillate or the permeate/diluate with active carbon according to step ii.c) (or ii.c') or ii.c"), respectively) of the present invention is carried out by passing the distillate or preferably the permeate/diluate through a column filled with active carbon. The column is in particular a double-walled column, which can be heated by passing steam or hot gas. By passing steam through the active carbon column and/or by heating the jacket of the double-walled column with the chimney gases of the MVR evaporator, the adsorbed volatile organic compounds are released from the active carbon and the active carbon column is thereby regenerated. The released volatile compounds can be regained as described above.

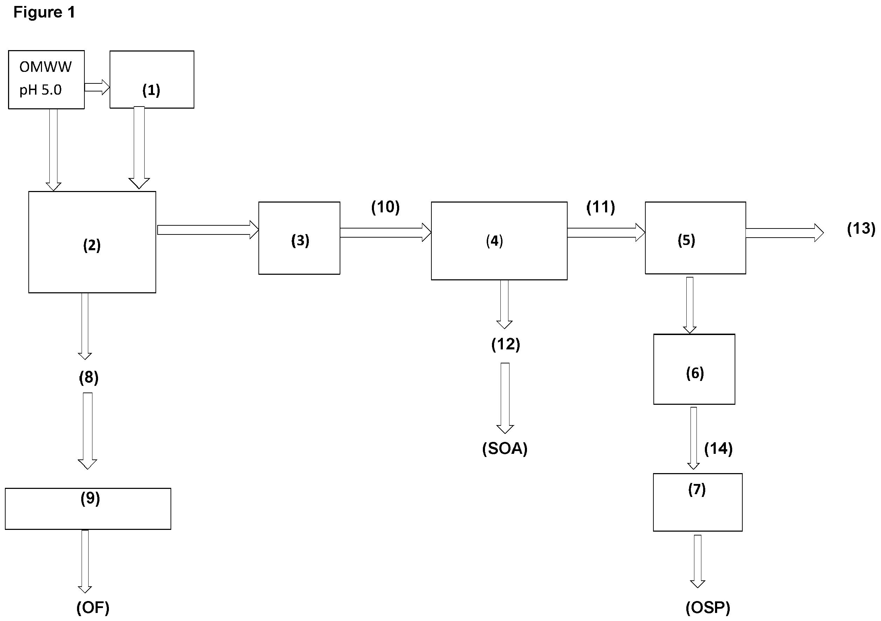

The invention is further explained by figure 1.

Figure 1: Flow diagram of the process of the invention

List of reference numbers used in figure 1:
- (1): Pond for storing OMWW
- (2): MVR evaporator
- (3): Neutralization
- (4): Reverse osmosis unit
- (5): Active carbon column
- (6): Regeneration of active carbon
- (7): Extraction
- (8): Bottom fraction
- (9): Mixing bottom fraction with pomace
- (10): Distillate
- (10): Neutralized distillate
- (11): Permeate
- (12): Reject
- (13): Treated reject
- (14): Products obtained from regeneration (6)
- (OF): Organic fuel
- (OSP): Olive spirit
- (SOA): Salt of olive acids

According to the flow diagram of fig. 1, OMWW having a pH of about 5.0 may be charged to a pond (1) for settling of solids. The OMWW may be introduced into the MVR evaporator (2) directly or after settling of the solids from the pond (1). It is also possible to use a mixture of non-settled OMWW and OMWW after settling of solids in order to adjust the solids content of the OMWW to a defined value and thereby compensating changes in the quality of the OMWW. Preferably, the CO₂ contained in the OMWW is stripped by aeration in the feed tank before it is fed to the MVR.

A hot distillate (10) having a temperature of about 105°C, a pH of about 3.2 and a COD of 6 to 20 g/L and a bottom fraction (8) having a total solids content of about 15-40% by weight are discharged from the evaporator. The hot bottom fraction (8) can be concentrated to a total solids content of 80 to 90% by weight (not shown) and thereafter mixed with pomace (9) when still hot. Thereby, the organic fuel (OF) is obtained. It is also possible to mix the hot bottom fraction (8) directly with pomace. The hot distillate is cooled in a heat exchanger to transfer its energy to the cold OMWW introduced into the evaporator (not shown). Thereby, the distillate is cooled to a temperature of about 35-45°C.

The cooled distillate is then is mixed with a 5-10 % b.w. suspension of lime in a neutralization unit (3) to obtain an aqueous liquid (10) having a pH of about 7.5.

The aqueous liquid (10) is then passed through a reverse osmosis unit (4) where a permeate (11) and a retenate (12) are obtained in a volume ratio of about 95:5. As an alternative, the aqueous liquid (10) may then be passed through a electrodialysis unit where a diluate and a concentrate are obtained in a volume ratio of about 95:5.

The permeate (11) (or the diluate, respectively) is passed through a double-walled column (5) filled with active carbon, whereby most of the neutral organic compounds contained in the permeate are adsorbed to the active carbon. Thereby, a clear colourless aqueous permeate (13) is obtained. This aqueous permeate (13) (or the diluate, respectively) has a COD value of below 2g/L (< 2,000 ppm) in particular of at most 1500 ppm. Therefore, it can be directly discharged into the environment, recycled in the factory for different purposes or stored and used later for irrigation.

The reject (12) (or the concentrate, respectively) contains the calcium salts of the carboxylic acids contained in the neutralized distillate (10). The salts are typically a mixtures of calcium salts of acetic acid, propionic acid, butyric acid and valeric acid. Concentrating the reject (12) to dryness results in a free-flowing powder of these calcium salts, hereinafter also referred to as salts of olive acids (SOA).

The active carbon contained in the column (5) can be regenerated by passing steam (6) and heating the double-walled column (5) with the hot chimney gases (200 to 250°C) of the MVR evaporator (2). The hot effluent (14) of the regenerated active carbon column (5) is then condensed to a liquid which is extracted in an extraction unit (7) with hexane or diethyl ether. After evaporation of the organic solvent, a concentrated mixture of the organic volatile compounds (aldehydes, alcohols) contained in the OMWW is obtained. This mixture is referred to as olive spirit (OSP).

## Claims

1. A process for the treatment of wastewater from olive oil production which comprises the following steps:
i) Evaporating the wastewater in an evaporator with mechanical vapour recompression (MVR evaporator) to obtain a bottom fraction and an acidic aqueous distillate;
ii) Subjecting the aqueous distillate to the following measures in any order, provided that step ii.a) is carried out prior to steb ii.b):
ii.a) neutralization of the acidic distillate;
ii.b) reverse osmosis or electrodialysis, whereby a permeate or diluate, respectively, and a reject or concentrate, respectively, are obtained, where the reject and the concentrate, respectively, contain one or more salts of organic carboxylic acids;
ii.c) treatment with active carbon.

2. The process of claim 1, wherein the wastewater is concentrated in the MVR evaporator to obtain a bottom fraction having a total solids content of at least 15% by weight, in particular in the range of 15 to 50% by weight, especially in the range of 20 to 35 % by weight.

3. The process of any one of the preceding claims, wherein the bottom fraction obtained in the MVR evaporator is concentrated in a steam generator where a hot concentrated residue having a solids content of at least 70% by weight is obtained.

4. The process of any one of the preceding claims, wherein the hot bottom fraction of the MVR evaporator or the hot concentrated residue obtained from the steam generator is mixed with dry pomace before cooling.

5. The process of any one of the preceding claims, wherein the aqueous distillate is neutralized in step ii.a) with an inorganic base to a pH value of above pH 6, in particular to a pH value in the range of pH 6.5 to pH 8.5 and especially in the range of pH 7.0 to pH 8.0.

6. The process of claim 5, wherein the base is aqueous calcium hydroxide or sodium hydroxide.

7. The process of any one of the preceding claims 5 or 6, wherein the salts of the organic carboxylic acids contained in the reject/concentrate are separated from the reject/concentrate.

8. The process of any one of the preceding claims, wherein the wastewater from olive oil production is subjected to a solid liquid separation prior to subjecting it to evaporation of step i).

9. The process of any one of the preceding claims, wherein step ii.b is carried out as a reverse osmosis.

10. The process of any one of the preceding claims, carried out in the following order:
i) Evaporating the wastewater in an evaporator with mechanical vapour recompression to obtain a bottom fraction and an acidic aqueous distillate;
ii.a) neutralisation of the acidic distillate to a pH value of above pH 6, in particular to a pH value in the range of pH 6.5 to pH 8.5 and especially in the range of pH 7.0 to pH 8.0;
ii.c') treatment of the neutralized distillate with active carbon to obtain a treated and neutralized distillate;
ii.b') reverse osmosis or electrodialysis of the treated and neutralized distillate, to obtain a permeate/diluate and a reject/concentrate which contains one or more salts of organic carboxylic acids.

11. The process of any one claims 1 to 9, carried out in the following order:
i) Evaporating the wastewater in an evaporator with mechanical vapour recompression to obtain a bottom fraction and an acidic aqueous distillate;
ii.a) neutralisation of the distillate to a pH value of above pH 6, in particular to a pH value in the range of pH 6.5 to pH 8.5 and especially in the range of pH 7.0 to pH 8.0;
ii.b") subjecting the neutralized distillate to a reverse osmosis or electrodialysis to obtain an aqueous permeate/diluate and a reject/concentrate which contains one or more salts of organic carboxylic acids;
ii.c") a treatment of the permeate/diluate with active carbon.

12. The use of the salts, in particular the calcium salts, obtained from the reject/concentrate according to claim 7 as a preservative for food and fodder.

13. The use of the mixture of the concentrated residue and the pomace obtained according to claim 4 as a solid organic fuel.

14. An apparatus for the treatment of wastewater from olive oil which comprises an evaporator with mechanical vapour recompression, a treatment unit containing active carbon, a neutralization unit and either a reverse-osmosis unit or an electrodialysis unit and which optionally further comprises a steam generator, a heat exchanger and a tank for the OMWW having an aeration unit.

15. The use of an apparatus or process of any one of claim 1 to 11, 14 or 15 for the treatment for OMWW to obtain a treated water with COD values at most 2000 ppm, in particular at most 1500 ppm.
